# EUROPÄISCHE PATENTSCHRIFT

(11) **EP 3 417 350 B1**
(45) Veröffentlichungstag und Bekanntmachung des Hinweises auf die Patenterteilung: **09.08.2023**
(21) Anmeldenummer: 17705397.2
(22) Anmeldetag: 15.02.2017
(51) Int. Cl.: G05D 1/02, G05D 1/00, E04H 4/16

(54) **VERFAHREN ZUR STEUERUNG EINES AUTONOMEN MOBILEN ROBOTERS**
METHOD FOR CONTROLLING AN AUTONOMOUS MOBILE ROBOT
PROCÉDÉ DE CONTRÔLE D'UN ROBOT MOBILE AUTONOME

(30) Priorität: 15.02.2016 DE 102016102644
(43) Veröffentlichungstag der Anmeldung: 26.12.2018
(73) Patentinhaber: Robart GmbH, 4020 Linz (AT)
(72) Erfinder: ARTES, Harold, 4020 Linz (AT); MASCHER, Erwin, 4020 Linz (AT); VOGEL, Reinhard, 4020 Linz (AT)
(74) Vertreter: Westphal, Mussgnug & Partner, Patentanwälte mbB
(86) Internationale Anmeldenummer: PCT/EP2017/053398
(87) Internationale Veröffentlichungsnummer: WO 2017/140726

(56) Entgegenhaltungen:
- WO-A1-2015/039621
- US-A1- 2007 282 484
- US-A1- 2010 324 731
- US-A1- 2013 024 025
- US-A1- 2013 118 528

## Beschreibung

### TECHNISCHES GEBIET

Die Erfindung betrifft einen mobilen, autonomen Serviceroboter wie z.B. einen Roboter zur Bearbeitung von Oberflächen (Reinigung von Böden, Mähen von Gras, Anstreichen einer Fläche, etc.). Die Erfindung betrifft insbesondere ein Verfahren zur Steuerung eines autonomen mobilen Serviceroboters zur lokalen Bearbeitung eines bestimmten Teils eines Robotereinsatzgebietes.

### HINTERGRUND

In den letzten Jahren finden autonome mobile Roboter, insbesondere Serviceroboter, zunehmend Verwendung im Haushaltsbereich, beispielsweise zur Reinigung oder zur Überwachung einer Wohnung. Darüber hinaus werden Serviceroboter wie beispielsweise der PR2 (Personal Robot 2) von *Willow Garage Inc.* entwickelt, die mit Greifarmen ausgestattet sind, um beispielsweise selbstständig Gegenstände zu greifen und zu transportieren (beispielsweise ein Getränk aus dem Kühlschrank zu nehmen und dem Nutzer zu bringen).. Ein weiteres Beispiel für autonome mobile Serviceroboter sind sogenannte Telepräsenzroboter (*Mobile Virtual Presence Devices, Telepresence Robot*)*,* die Informationen bereitstellen oder es Menschen ermöglichen, über große Distanzen zu kommunizieren.

Ein häufiges Einsatzszenario eines Serviceroboters ist die Verrichtung einer Aufgabe in einem verhältnismäßig kleinen, lokal begrenzten Gebiet innerhalb des Robotereinsatzgebietes (z.B. eine Wohnung), dessen Position vom Nutzer angegeben wird. Beispielsweise kann ein kleiner Reinigungsroboter von einem Nutzer verwendet werden, um eine lokale Verschmutzungen wie beispielsweise heruntergefallenen Krümel in einem bestimmten Bereich der Wohnung zu beseitigen. Hierzu kann der Benutzer den Roboter beispielsweise zu der Stelle der Verschmutzung tragen oder ihn mittels einer Fernbedienung zu dieser steuern. In beiden Fällen muss der Nutzer aktiv den Roboter zu der Verschmutzung bewegen.

Die Publikation US 2013/024025 A1 betrifft die Definition eines virtuellen Gebiets innerhalb eines Gesamtbereichs. Dazu definiert der Nutzer ein zu bearbeitendes Gebiet auf einem Display, das dann dem Roboter zugeführt wird. Die Publikation US 2007/282484 A1 betrifft die automatische Klassifizierung von Unterbereichen anhand von Informationen, die durch die Sensoren des Roboters gewonnen werden. Die Publikation US 2010/324731 A1 betrifft die Definition eines virtuellen Gebiets innerhalb eines Gesamtbereichs. Dazu fährt der Nutzer den Roboter entlang eines Perimeters, bis ein abgeschlossener Bereich definiert wird. Der Roboter kann dann innerhalb des so definierten Bereiches arbeiten. Die Publikation WO 2015/039621 A1 betrifft ein Verfahren zur Kontrolle eines Reinigungsroboters mittels eines Smartphones und offenbart das Festsetzen einer virtuellen Grenze durch einen Nutzer, welche während der Bearbeitung nicht passiert werden darf.

Auch die Publikationen EP 2330471 A2 und US 2014/303775 A1 betreffen Verfahren zur Steuerung mobiler Roboter.

Die der Erfindung zugrunde liegende Aufgabe kann darin gesehen werden, neue Verfahren zur Verfügung zu stellen und bestehende Verfahren zu verbessern, um einem autonomen mobilen Roboter für die Verrichtung einer Aufgabe eine lokale Position innerhalb eines größeren Robotereinsatzgebietes zuzuweisen. Die Aufgabe wird durch ein Verfahren gemäß Anspruch 1 sowie durch ein System gemäß Ansprüchen 13 gelöst. Unterschiedliche Ausführungsformen und Weiterentwicklungen sind Gegenstand der abhängigen Ansprüche.

### ZUSAMMENFASSUNG

Die Erfindung wird in der anhängigen Anspruchsfassung dargelegt. Bevorzugte Ausführungsformen sind Gegenstand der abhängigen Ansprüche.

### KURZE BESCHREIBUNG DER ABBILDUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. In den Abbildungen zeigt:
Figur 1 zeigt schematisch einen autonomen mobilen Roboter und ein mobiles Gerät für die Bedienung des Roboters.
Figur 2 zeigt anhand eines Blockdiagrams die unterschiedlichen Module eines Roboters.
Figur 3 illustriert schematisch ein Verfahren zur Reinigung einer Verschmutzung in einem lokal abgegrenzten Bereich eines größeren Robotereinsatzgebietes.
Figur 4 illustriert die automatische "intelligente" Anpassung eines lokal begrenzten zu reinigenden Bereichs an eine gemessene Schmutzverteilung.
Figur 5 illustriert die automatische "intelligente" Anpassung eines lokal begrenzten zu reinigenden Bereichs an eine oder mehrere benachbarte Wände.
Figur 6 illustriert die Reinigung eines Bereichs um eine Sitzgruppe mit einem Tisch und mehreren Stühlen.
Figur 7 zeigt schematisch einen über Funk mit dem Roboter verbundenes externe Gerät mit einem Taster zum Starten des Roboters zur Verrichtung einer bestimmten Tätigkeit in einem lokal begrenzten Bereich des Robotereinsatzgebietes.
Figur 8 zeigt die Bedienung des Roboters mittels eines Tablet-PCs für eine Tätigkeit in einem lokal begrenzten Bereich des Robotereinsatzgebietes.
Figur 9 zeigt ein Flussdiagramm betreffend die Nutzerinteraktion des Roboters mittels einer während des Betriebs neu erstellten Karte des Robotereinsatzgebietes.

### DETAILLIERTE BESCHREIBUNG

Ein autonomer mobiler Serviceroboter kann üblicherweise selbsttätig eine oder mehrere Aufgaben, wie beispielsweise die Reinigung oder Überwachung eines Haushalts oder den Transport von Gegenständen innerhalb eines Haushalts, ausführen. Die folgenden Beispiele sollen exemplarisch verschiedene Einsatzmöglichkeiten eines Reinigungsroboters beschreiben. Die vorliegende Erfindung ist jedoch nicht auf die erläuterten Beispiele beschränkt, sondern allgemein auf alle Anwendungen anwendbar, in denen ein Nutzer einem autonomen mobilen Roboter eine Aufgabe an einer vom Nutzer vorgebbaren Position oder in einem vom Nutzer vorgebbaren Bereich eines größeren Robotereinsatzgebietes zuweisen will.

Ein mobiler autonomer Roboter umfasst in der Regel ein Antriebsmodul, welches beispielsweise Elektromotoren, Getriebe und Räder aufweisen kann, womit der Roboter - theoretisch - jeden Punkt seines Einsatzgebiets erreichen kann. Der Roboter kann des Weiteren ein Arbeitsmodul umfassen, wie beispielsweise ein Reinigungsmodul zur Reinigung einer Bodenfläche (d.h. eine Bürste, eine Staubsaugvorrichtung, etc.) oder einen Greifarm zum Fassen und Transportieren von Gegenständen. Ein als Telepräsenzroboter ausgebildeter mobiler autonomer Roboter kommt ohne Arbeitsmodul aus und hat stattdessen zumindest eine Multimediaeinheit mit beispielsweise einem Mikrofon, einem Lautsprecher, einer Kamera und einen Bildschirm.

Um autonom eine Aufgabe verrichten zu können, hat ein mobiler autonomer Roboter üblicherweise ein Navigationsmodul und geeigneter Sensoren, mit Hilfe derer sich der Roboter in seiner Umgebung orientieren und durch diese navigieren kann. Das Navigationsmodul kann z.B. eine Hindernisvermeidungsstrategie implementieren und/oder einen SLAM-Algorithmus (engl.: *Simultaneous Localization and Mapping,* deutsch: simultane Lokalisierung und Kartenerstellung, siehe z. B. H. Durrant-Whyte and T. Bailey: "Simultaneous Localization and Mapping (SLAM): Part I The Essential Algorithms", in: IEEE Robotics and Automation Magazine, Bd. 13, Nr. 2, S. 99-110, Juni 2006) verwenden. Dazu können in dem Roboter eine oder mehrere Karten des Robotereinsatzgebiets gespeichert sein. Die Karte des Robotereinsatzgebiets kann der Roboter während eines Einsatzes neu erstellen oder eine zu Beginn des Einsatzes schon vorhandene Karte nutzen. Eine vorhandene Karte kann bei einem vorhergehenden Einsatz, beispielsweise einer Erkundungsfahrt, vom Roboter selber erstellt worden sein, oder von einem anderen Roboter und/oder dem Benutzer zur Verfügung gestellt werden. Ein für das Orientieren und Navigieren des Roboters geeigneter Sensor ist beispielsweise ein Sensor, der dazu ausgebildet ist, Abstände zu Objekten in der Umgebung zu messen, wie beispielsweise ein optischer und/oder akustischer Sensor, der z.B. mittels Triangulation oder Laufzeitmessung eines ausgesandten Signals arbeitet (z.B. Triangulationssensor, Time-Of-Flight- Kamera, Laserscanner, Ultraschallsensoren, etc). Andere typische Beispiele für geeignete Sensoren sind Kameras (zusammen mit digitaler Bildverarbeitung), taktile Sensoren, Beschleunigungs- und Drehratensensoren oder Odometer.

Die für das Verhalten des Roboters verantwortliche Software kann vollständig auf dem Roboter (entsprechender Prozessor und Speicherelement) ausgeführt werden oder zumindest teilweise auf einen externen Rechner ausgelagert sein, welcher beispielsweise in einem Heimnetzwerk oder über das Internet (Cloud) erreichbar ist.

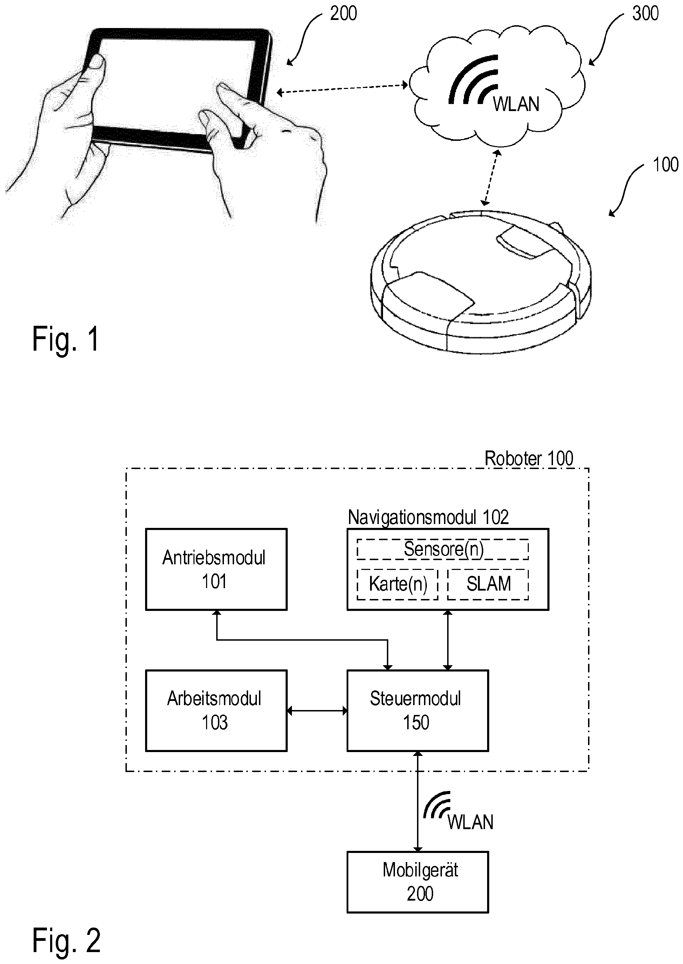

Wie in Fig. 1 dargestellt ist, kann die Steuerung eines autonomen mobilen Serviceroboters 100 beispielsweise mit Hilfe eines externen Mobilgeräts 200 wie z.B. einer Smartwatch, einem Smartphone, einem (Smart-)Fernseher oder einem Tablet-PC erfolgen. Das Mobilgerät kommuniziert beispielsweise drahtlos über ein Heimnetzwerk 300 mit dem Roboter (z. B. über ein drahtloses Netzwerk gemäß dem IEEE 802.11-Standard oder ähnliche). Figur 2 illustriert anhand eines Blockschaltbildes die oben erwähnten Module eines Serviceroboters 100. In dem dargestellten Beispiel umfasst der Roboter 100 ein Antriebsmodul 101 (z.B. mit Motor, Getriebe, etc.), ein Navigationsmodul 102 (z.B. mit Sensoren, elektronischen Karten, einer SLAM-Funktion, etc.), einem Arbeitsmodul 103 (z.B. mit Bürsten, Saugvorrichtung, etc.) sowie einer zentralen Steuereinheit 150. Die Steuereinheit 150 umfasst in der Regel einen Mikroprozessor zur Ausführung von Prozessorinstruktionen, welche das Verhalten des Roboters bestimmen. Insbesondere steuert die Steuereinheit 150 den Betrieb des Antriebmoduls 101, des Navigationsmoduls 102 und des Arbeitsmoduls 103 und ist dazu ausgebildet, z.B. über das drahtlose Netzwerk 300 mit einem Mobilgerät 200 zu kommunizieren, welches Interaktion mit dem Benutzer erlaubt. Die Module 101, 102, 103 sind lediglich als Funktionseinheiten zu verstehen und nicht unbedingt als räumlich getrennte Baugruppen. Der Aufbau und die Funktionsweise der genannten Einheiten ist an sich bekannt und wird daher nicht näher erläutert.

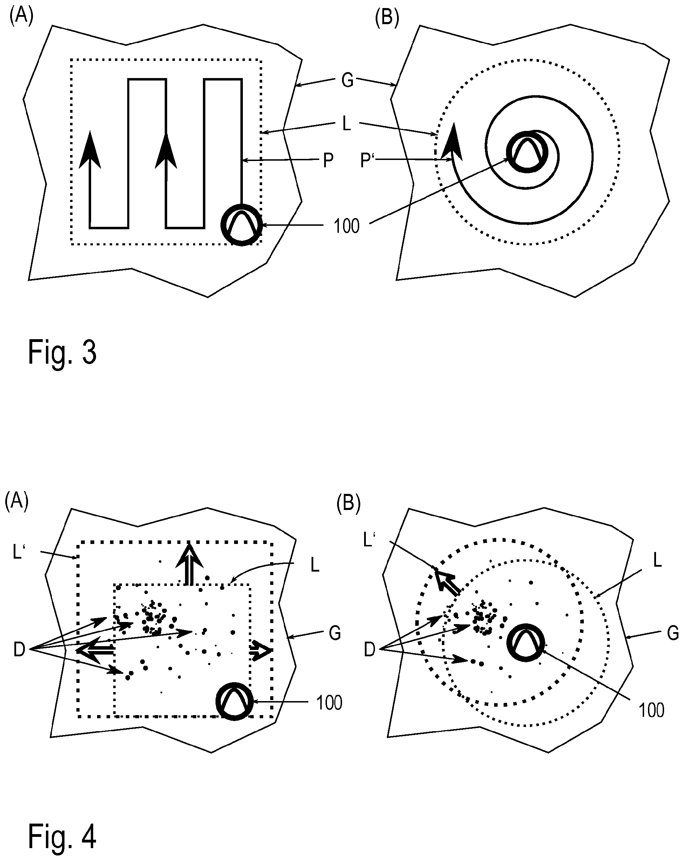

Figur 3 zeigt zwei Beispiele von Verfahren, um eine Verschmutzung in einem lokal begrenzten Bereich innerhalb eines größeren Robotereinsatzgebiets G durch einen Roboter 100 reinigen zu lassen. Hierzu wird der Roboter 100 von seinem Nutzer in der Nähe der zu reinigenden Verschmutzung an einer (theoretisch) frei wählbaren Stelle des Robotereinsatzgebiets G positioniert. Dies geschieht beispielsweise durch Hintragen des Roboters durch den Nutzer oder mittels vom Nutzer manuell eingegebener Fahrbefehle, die beispielsweise durch Drücken von Richtungstasten auf einem externen Gerät (z.B. Fernbedienung, Smartphone, etc.) erzeugt werden. Nach einer Nutzereingabe (beispielsweise durch drücken eines Knopfes am Roboter) reinigt der Roboter 100 ausgehend von seiner Position einen durch die Roboterposition bestimmten vordefinierten Bereich L in regelmäßigen Bahnen P. Der vordefinierte (Standard-) Bereich L ist beispielsweise eine einfache geometrisch Grundform definierter Größe, wie beispielsweise ein Quadrat (siehe Fig. 3A), ein Kreis (siehe Fig. 3B), ein Rechteck oder ein anderes regelmäßiges Vieleck. Die Position des zu reinigenden Bereichs L ist durch die (vom Nutzer bestimmte) Roboterposition (inkl. Orientierung) bestimmt, an der der Nutzer den Roboter platziert. Diese Position ist beispielsweise ein Randpunkt (insbesondere Ecke) (siehe Fig. 3A) oder der Mittelpunkt (siehe Fig. 3B) des standardisierten Bereichs L.

Die Bearbeitung des standardisierten Bereichs L kann beispielsweise entlang einer mäanderförmigen Bahn P (siehe Fig. 3A) oder entlang einer spiralförmigen Bahn P` (siehe Fig. 3B) erfolgen, wobei das Spiralmuster auch eckig verlaufen kann, um z.B. ein quadratisches Gebiet zu reinigen. Die Reinigung kann auch entlang einer Bahn erfolgen, die einem beliebigen anderen Muster entspricht. Beispielsweise kann eine Reinigungsstrategie darin bestehen, innerhalb des standardisierten Bereichs L entlang einer zufälligen/chaotischen Bahn zu reinigen. Nach der Reinigung des standardisierten Bereichs L kann der Roboter 100 zu seinem Ausgangspunkt zurückkehren, beispielsweise durch direktes Anfahren eines zuvor verlassenen Ausgangspunktes oder durch eine zweite Reinigung mit einem geeignet gewählten Reinigungsmuster. Die mit Bezug auf Fig. 3 beschriebenen Vorgehensweisen haben den Nachteil, dass sie recht unflexibel sind. So muss beispielsweise bei unterschiedlich großen zu reinigenden Bereichen eine Nutzereingabe erfolgen um die Größe des zu reinigenden Bereichs L anpassen zu können.

Um den praktischen Nutzen für den Nutzer zu erhöhen, wäre es wünschenswert, wenn die mit Bezug auf Fig. 3 beschriebenen Betriebsmodi eines autonomen mobilen Roboters zur Reinigung einer lokal vorhandenen Verschmutzung "intelligenter" ausgestaltet wäre. Zu diesem Zweck kann der Roboter 100 mittels geeigneter Sensoren seine Umgebung erfassen und basierend auf den von den Sensoren erfassten Daten automatisch den standardisierten Bereich L beispielsweise durch Drehung, Verschiebung und/oder Vergrö-βerung anpassen. Eine weitere Möglichkeit zur Anpassung des standardisierten Bereichs L ist das selbsttätige erneute Starten dieses Reinigungsmodus zur Reinigung einer lokal vorhandenen Verschmutzung mit Startpunkt, der automatisch und basierend auf von den Sensoren erfassten Daten ermittelten wird.

"*Intelligentes" automatisches Anpassen an die Umgebung:* Figur 4 zeigt ein Beispiel, in dem der Roboter eine starke Verschmutzung D in einem lokal abgegrenzten Bereich reinigen soll. Dabei soll der standardisierte Bereich L (vgl. Fig. 3) dynamisch so angepasst werden, dass möglichst die gesamte Verschmutzung D in einem Vorgang gereinigt werden kann. Hierzu verfügt der Roboter 100 beispielsweise über einen Schmutzsensor, der den auf dem Boden liegenden Schmutz D erkennt (z. B. eine Kamera), oder der die aufgenommene Schmutzmenge detektiert. Solche Sensoren sind an sich bekannt und basieren beispielsweise auf einer optischen Detektion des an aufgenommenen Schmutzpartikeln (z.B. mittels einer Bürste oder durch Saugen) gestreuten Lichts oder auf einer Detektion mechanischer (z.B. akustischer) Schwingungen, die durch auftreffende Schmutzpartikel erzeugt werden. Mit einem solchen Schmutzsensor kann der Roboter während der Reinigungsfahrt die Verteilung des Schmutzes auf der Bodenfläche bestimmen. Basierend auf dieser gemessenen Verteilung kann der Roboter 100 die Grenzen des standardisierten Bereichs L verschieben oder skalieren (oder beides), wodurch automatisch einen angepasster Bereich L'bestimmt wird. Dies geschieht insbesondere während der Reinigungsfahrt oder nachdem der standardisierte Bereich L zumindest einmal vollständig abgefahren wurde.

In dem in Fig. 4A gezeigten Beispiel werden die Grenzen des standardisierten Bereichs L so angepasst, dass die grobe Verschmutzung D möglichst vollständig von dem angepassten Bereich L` erfasst wird. Hierzu werden beispielsweise - während der Reinigung des standardisierten Bereichs L - die Grenzen des Bereichs L so weit verschoben, bis ein Segment einer (z.B. mäanderförmigen) Reinigungsbahn ohne signifikante Schmutzaufnahme durchfahren werden kann. Der Vorteil dieses Vorgehens ist, dass die Grenzen des angepassten Bereichs L' schon während der Reinigung ermittelt werden können, indem basierend auf aktuell ermittelten Sensordaten entschieden wird, ob und wie die aktuelle Reinigungsbahn fortgesetzt wird, beispielsweise indem ein weiteres stückweise lineares Bahnsegment an die mäanderförmige Bahn angehängt wird.

Alternativ kann ein mathematisches Verteilungsmodel ermittelt werden, welches die (mittels den Schmutzsensoren ermittelte tatsächliche) Verteilung des Schmutzes innerhalb des standardisierten Bereichs L repräsentiert oder approximiert. Beispielsweise kann angenommen werden, dass die Verschmutzung (2D-) normalverteilt ist. Solch eine Normalverteilung ist durch ihr Maximum (Mittelwert) und ihre Breite (Standardabweichung) definiert. Durch die Ermittlung der am stärksten verschmutzen Stelle im Bereich L kann der Mittelwert der Verteilung geschätzt werden. Durch die räumliche Veränderung der Verschmutzung ausgehend von der am stärksten verschmutzen Stelle kann zusätzlich (innerhalb des Bereichs L) die Standardabweichung geschätzt werden. Auf Basis dieses auf diese Weise ermittelten mathematischen Verteilungsmodels kann die Schmutzmenge und - verteilung außerhalb des Bereichs L geschätzt werden und - basierend darauf - nun die Grenzen des angepassten Bereichs L` beispielsweise so festgelegt werden, dass die Wahrscheinlichkeit einer Verschmutzung außerhalb des so definierten Bereichs L' kleiner als ein Grenzwert ist (also beispielsweise kleiner als 1%). Neben der Normalverteilung als Ansatz für ein mathematisches Modell der Schmutzverteilung sind auch beliebige weitere stochastische Verteilungsmodelle möglich. In einer alternativen Ausgestaltung wird mittels Extrapolation der mit (mindestens) einem Schmutzsensor ermittelten tatsächlichen Verteilung des Schmutzes innerhalb des Bereichs L die Schmutzmenge und -verteilung außerhalb des Bereichs L geschätzt.

In dem in Fig. 4B gezeigten Beispiel wird der gesamte (im vorliegenden Fall kreisförmige) standardisierte Bereich L so verschoben, dass beispielsweise das Maximum der Verschmutzung D näherungsweise im Mittelpunkt des verschobenen (und bei Bedarf skalierten) Bereichs L liegt. Hierbei sei angemerkt, dass eine Verschiebung des standardisierten Bereichs L nur sinnvoll ist, solange der (durch den Nutzer festgelegte) Startpunkt innerhalb des verschobenen Bereichs L' liegt. Um dies zu gewährleisten kann beispielsweise der verschobene Bereich L` zusätzlich vergrößert werden.

Alternativ kann auch erst der standardisierte Bereich L vollständig gereinigt werden. Basierend auf den Sensormessungen wird der Reinigungsvorgang wiederholt, wobei in der Wiederholung der verschobene Bereich L' gereinigt wird. Dieser wird beispielsweise so festgelegt, dass das Maximum der (im ersten Durchgang der Reinigung gemessenen) Verschmutzung im Mittelpunkt des verschobenen Bereichs L liegt. Dieses Vorgehen kann bei Bedarf iterativ wiederholt werden, wobei die Sensordaten der jeweils unmittelbar vorhergehenden Reinigung oder aller vorhergehender Reinigungen berücksichtigt werden können.

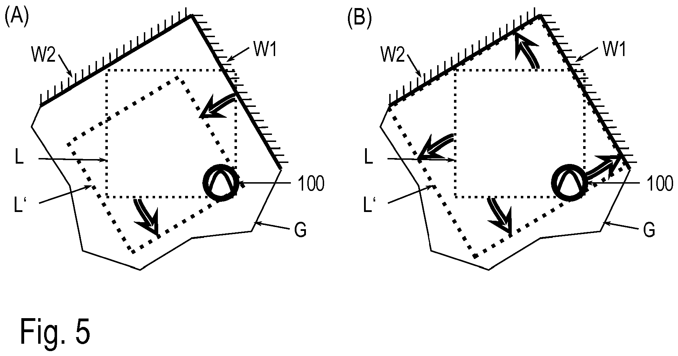

Figur 5 zeigt ein Beispiel, in dem der Roboter 100 nahe einer Ecke (definiert durch zwei Wände W1 und W2 eines Raumes) reinigen soll. Hierbei erfasst der Roboter 100 die Wände W1 und W2 mit einem Sensor zur Hinderniserfassung, wie beispielsweise einem Triangulationssensor zur Abstandsmessung, der auch zur Navigation und zum Kartenaufbau (z.B. mittels SLAM) verwendet wird (vgl. Fig. 2). In einer einfachen beispielhaften Ausführung (Fig. 5A) rotiert der Roboter den standardisierten Bereich L um seine Startposition, um so einen modifizierten, zur nächsten Wand W1 parallel ausgerichteten zu reinigenden Bereich L' zu erhalten. Allerdings verbleibt im vorliegenden Beispiel gemäß Fig. 5A ein vergleichsweise kleiner Bereich zwischen Wand W1 und dem modifizierten Bereich L'. Da sich jedoch an Wänden häufig Schmutz sammelt, kann es sinnvoll sein, den modifizierten Bereich L` bis zu einer Wand hin zu erweitern. Figur 5B zeigt ein Beispiel, in dem der zu reinigende Bereich L' in einer ersten Richtung bis hin zur Wand W1 und in einer zweiten Richtung bis hin zur Wand W2 erweitert wurde, wobei die Form des Gebiets quadratisch gehalten wurde. In einem alternativen Beispiel ist der Bereich L` rechteckig, wobei zwei Seiten durch die Wände W1 und W2 und die beiden anderen Seiten beispielsweise durch die Eckpunkte des ursprünglichen standardisierten Bereichs L gegeben sind.

Die Entscheidung, ob und wie der standardisierte Bereich L an einer Wand ausgerichtet werden soll, kann beispielsweise basierend auf dem Abstand der Startposition des Roboters zu der nächsten Wand und/oder den Abständen der Randpunkte des standardisierten Bereichs L zu den umgebenden Wänden bestimmt werden. In dem Beispiel aus Fig. 5 schneidet der standardisierten Bereich L die Wand W1, weshalb eine Ausrichtung an dieser Wand erfolgt. Zusätzlich kann beispielsweise auch die Orientierung des Roboters in Bezug auf eine nahe Wand berücksichtigt werden. Wenn beispielsweise (zumindest) eine Seite des (von der Roboterposition und -orientierung abgeleiteten) standardisierten Bereichs L annähernd parallel bzw. senkrecht zu einem nahen Hindernis steht (z. B. Winkelabweichung von weniger als 10°), so kann davon ausgegangen werden, dass ein Nutzer eine entsprechende Ausrichtung beabsichtigt hat, und der Standardisierte Bereich wird an der betreffenden Wand ausgerichtet.

Neben der Anpassung des standardisierten Bereichs L basierend auf den von Sensoren erfassten Daten, kann der Roboter auch die geometrische Grundform des standardisierten Bereichs L an die räumlichen Gegebenheiten in der Umgebung des vom Nutzer vorgegeben Startpunkts anpassen. So kann beispielsweise der Roboter (mit Hilfe von Sensoren) erkennen, dass er in der Nähe einer Wand und/oder Zimmerecke platziert wurde. In diesem Fall wird ein standardisierter Bereich L mit einer quadratischen bzw. rechteckigen Grundform gewählt, und diese Grundform des zu reinigenden Bereichs L wird modifiziert, indem sie an die Wand und/oder die Ecke wie oben beschrieben angepasst wird. Wenn dagegen der Roboter in einem großen freien Gebiet (z.B. in der Mitte eines Zimmers) platziert wird, so dass es keine naheliegende Vorzugsrichtung zur Ausrichtung z.B. eines Quadrates gibt, so kann für einen Bereich L als geometrische Grundform ein Kreis gewählt werden. Dieser Bereich L kann dann beispielsweise wie in Bezug auf Fig. 4B beschrieben modifiziert werden.

Zahlreiche weitere Beispiele, bei dem die automatische Anpassung eines Bereichs L für die lokale Reinigung einer Bodenfläche dem Nutzer die Arbeit erleichtert, sind möglich. So kann der Roboter beispielsweise mit einem Sensor zur Erkennung des Bodenbelags ausgestattet sein und basierend auf diesen Messungen den standardisierten Bereich L anpassen. So kann der Roboter beispielsweise von einem Nutzer auf einen Teppich gesetzt werden, um diesen gezielt zu reinigen. Der Bereich L kann dann z.B. entlang den Grenzen des Teppichs ausgerichtet werden, analog zu der oben beschriebenen Ausrichtung an einer Wand.

Der Roboter kann z.B. einen zur Zimmerdecke gerichteten Sensor wie z.B. eine Kamera besitzen. Mit einem solchen Sensor kann der Roboter detektieren, ob er z.B. nahe eines Möbelstücks platziert wurde, unter dem der Roboter fahren kann. In diesem Fall kann der Roboter den standardisierten Bereich L basierend auf diesen Messungen anpassen. So kann der Roboter beispielsweise von einem Nutzer unmittelbar (d.h. höchstens einen Maximalabstand von der Bettkante entfernt) vor ein Bett gestellt werden, um gezielt unter diesem Bett zu reinigen. Der Bereich L wird dann an die Abmessungen des Betts angepasst.

Des Weiteren kann der Roboter dazu ausgebildet sein, einen Tisch mit Stühlen zu erkennen (Essecke). Wird ein Tisch mit Stühlen (Sitzgruppe) detektiert, kann der standardisierte Bereich L an die Sitzgruppe angepasst werden. Der Roboter kann z.B. basierend auf den erkannten Hindernissen (insbesondere die Stuhl- und Tischbeine) den zu reinigenden Bereich so groß wählen, dass um die Sitzgruppe (d.h. den Tisch und alle Stühle) herum beispielsweise ein Bereich von mindestens eine Roboterbreite gereinigt wird. Hierzu wird als zu reinigendes Gebiet L' beispielsweise ein Rechteck gewählt, welches die Sitzgruppe vollständig enthält. Die Orientierung des Rechtecks kann basierend auf der Ausrichtung der Sitzgruppe und/oder nahen Wänden festgelegt werden. Die Grenzen des Rechtecks werden beispielsweise so festgelegt, dass der minimale Abstand zu einem Tisch- und/oder Stuhlbein mindestens einem Roboterdurchmesser entspricht. So kann der Roboter beispielsweise von einem Nutzer nach dem Frühstück neben dem Frühstückstisch platziert werden, um so heruntergefallene Krümel beseitigen zu lassen. Das Erkennen geschieht beispielsweise mit einer Kamera mit Bilderkennung oder an den zahlreichen kleinen aber regelmäßigen Hindernissen, welche durch die Stuhl- und Tischbeine gebildet werden.

Des Weiteren kann der Roboter beispielsweise von einem Nutzer nahe einer Zimmertür platziert werden, so dass der standardisierte Bereich L in zwei Zimmern liegen würde. Der Roboter passt den zu reinigenden Bereich so an, dass er vollständig in einem Zimmer liegt. Am Ende der Reinigung kann der Roboter (mit oder ohne Rückfrage an den Nutzer) den Bereich L erneut anpassen, dass er vollständig in dem anderen Zimmer liegt.

Der Roboter kann auch dazu ausgebildet sein, basierend auf der neu gebildeten geometrischen Form des zu reinigenden Bereichs L` ein geeignetes Reinigungsmuster zu wählen. Beispielsweise kann für einen kleinen, runden oder quadratischen Bereich L` eine spiralförmige Bahn P (vgl. Fig. 3B) gewählt werden, während in einem großen rechteckigen Bereich eine mäanderförmige Bahn (vgl. Fig. 3A) gefahren wird, die beispielsweise parallel zur längeren Kante des rechteckigen Bereichs verläuft.

Der Roboter kann über eine Karte des Robotereinsatzgebiets verfügen, in welcher er sich lokalisieren kann. In diesem Fall kann der Roboter zusätzlich zu den von den Sensoren erhaltenen Informationen auch Informationen aus der Karte nutzen, um den zu bearbeitenden Bereich L zu modifizieren und an die Gegebenheiten in der Nähe des Startpunktes anzupassen. Insbesondere kann der Roboter zuvor erkannte oder durch den Nutzer eingetragene Gefahrenzonen berücksichtigen und meiden. Alternativ sind auch Anpassungen beispielsweise durch eine automatische Auswahl vordefinierter Grundformen und Größen für den zu reinigenden Bereich basierend auf den Sensormessungen (der Sensoren des Navigationsmoduls) möglich. Bei der Ermittlung des zu reinigenden Bereichs L' können Anforderungen an ein vorgebbares Bearbeitungsmaß (z.B. zu reinigende Fläche, Reinigungsdauer) gestellt werden. So kann beispielsweise gefordert werden, dass mindestens ein Quadratmeter gereinigt wird, um eine signifikante Reinigungsleistung zu erzielen. Eine weitere Anforderung könnte sein, dass die zu erwartende Reinigungsdauer eine vorgebbare Zeit wie beispielsweise 10 Minuten nicht überschreiten darf. Die Anforderungen an ein Bearbeitungsmaß (insbesondere Minimum und Maximum) können beispielsweise durch den Nutzer vorgebbar sein.

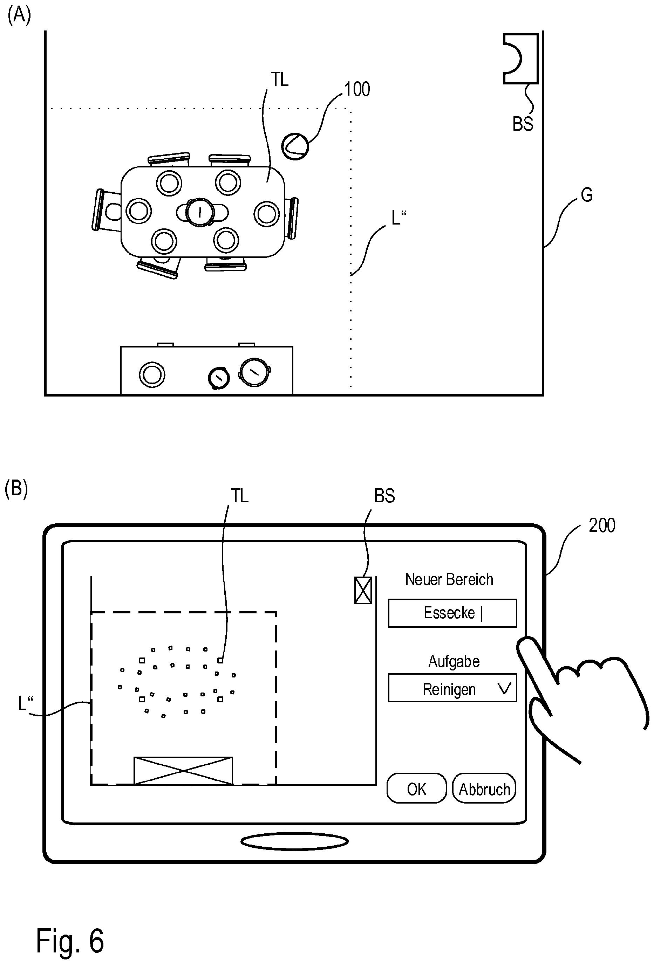

*Lokalisierung und Heimkehren:* Eine wünschenswerte Fähigkeit von Servicerobotern in einem Haushalt besteht darin, häufig wiederkehrende Aufgaben durchzuführen, wie beispielsweise die Reinigung rasch verschmutzender Stellen (z.B. der Boden einer Essecke), ohne jedoch das ganze Zimmer oder die komplette Wohnung reinigen zu müssen. Auch der Transport von gebrauchtem Geschirr, z.B. vom Tisch in einer Essecke zu einer Geschirrspülmaschine, kann eine dieser häufig wiederkehrenden Aufgaben sein. In der Literatur sind als Lösung für derartige Probleme Robotersysteme mit einer permanenten Karte des Robotereinsatzgebiets beschrieben. Diese Karte kann vom Roboter selbst erstellt worden sein oder auch anderweitig zur Verfügung gestellt werden. Der Nutzer kann sich die elektronische Karte des Robotereinsatzgebietes auf einer Mensch-Maschine-Schnittstelle (z.B. Tablet-PC 200, vgl. Fig. 1) anzeigen lassen und mit Hilfe dieser Karte den Roboter steuern und überwachen. Beispielsweise kann der Nutzer Standardarbeitsbereiche definieren, indem er beispielsweise per Hand oder automatisiert Teilbereiche in der Karte auswählt, dauerhaft abspeichert und so jederzeit einen gespeicherten Teilbereich für eine Reinigung auswählen kann. Beispielsweise kann der Nutzer so in der Karte eine "Essecke" mit Tisch und Stühlen und einen passenden Bereich herum als Standardarbeitsbereich L" auswählen und dauerhaft speichern (siehe Fig. 6A und 6B). Beispielsweise nach einem Essen kann der Nutzer nun sehr schnell den Roboter beauftragen, eventuell auf den Boden gefallene Krümel zu entfernen.

Einige Nutzer können es unhandlich finden, erst den z.B. Tablet-PC zu suchen und zu starten, um den Roboter zu beauftragen, eine kleine Verschmutzung zu beseitigen, wenn sie in kürzerer Zeit den Roboter an die Stelle tragen und starten können. Des Weiteren gibt es Situationen, in denen der Roboter nicht selbst direkt zu der zu bearbeitenden Stelle fahren kann, da er beispielsweise in einem Haus mit zwei oder mehr Etagen eingesetzt wird und nicht selbstständig in eine andere Etage gelangen kann. Auch in diesem Fall muss der Nutzer den Roboter per Hand umsetzen und kann ihn gleich gezielt zu der bearbeitenden Stelle tragen und starten. In derartigen Situationen kann es vorteilhaft sein, wenn der Roboter nach dem Absetzen und Starten durch den Nutzer selbsttätig erkennt, dass es für seine Position einen zuvor definierten Standardarbeitsbereich gibt. Beispielsweise setzt der Nutzer den Roboter neben ein Tischbein TL (siehe Fig. 6A und 6B) des Tisches des zuvor definierten Standardarbeitsbereichs "Essecke" (Bereich L", siehe Abb. 6A) und startet mittels Knopfdruck (z.B. einen direkt an dem Robotergehäuse angeordneten Taster) das Reinigungsprogramm zur Beseitigung einer lokalen Verschmutzung. Nach diesem Start beginnt der Roboter 100 seine Position mit Hilfe seiner Karte und mittels (mindestens) eines Sensors erkannter Charakteristika der Umgebung zu ermitteln (globale Lokalisierung). So kann der Roboter mit seinem Sensor beispielsweise den Tisch mit Stühlen und eine nahe Wand erkennen und so feststellen, dass er sich in dem als "Essecke" definierten Standardarbeitsbereich L" befindet. Diese (globale) Lokalisierung kann vorgenommen werden, bevor der Roboter 100 mit der eigentlichen Reinigung beginnt, um so direkt einen erkannten zuvor definierten Standardarbeitsbereich L" zu reinigen. Wenn der Roboter 100 sich nicht in einem zuvor definierten Standardarbeitsbereichs befindet, so reinigt er einen standardisierten Bereichs L (welcher zusätzlich wie oben mit Bezug auf Fig. 4 und 5 beschrieben modifiziert werden kann).

Um eine Beschleunigung des Reinigungsdurchgangs zu erreichen, kann der Roboter auch die Reinigung eines standardisierten Bereichs L (oder eines modifizierten standardisierten Bereichs L', vgl. Fig. 4 und 5) beginnen und parallel hierzu seine Position in der Karte bestimmen. Sobald der Roboter sich lokalisiert hat, kann der standardisierte Bereich L' auf den Standardarbeitsbereich "Essecke" (Bereich L", siehe Fig. 6) erweitert werden.

Eine Lokalisierung des Roboters 100 in einer bestehenden Karte des Robotereinsatzgebiets ermöglicht es auch, dass der Roboter 100 anhand der Karte (vgl Fig. 6A) prüfen kann, ob in dieser eine (erreichbare) Basisstation BS des Roboters 100 verzeichnet ist. Der Roboter kann somit nach Abschluss seiner Aufgabe automatisch prüfen, ob eine Basisstation für ihn erreichbar ist, ohne sie zuvor beispielsweise mit einem Sensor erfasst zu haben. Dies ist insbesondere relevant, wenn die Basisstation in einem anderen Raum ist als die Position, an der der Roboter durch den Nutzer abgesetzt wurde. Wenn keine Basistation erreichbar ist, so fährt der Roboter zu der Position zurück, an der der Nutzer ihn zuvor abgesetzt hat. Ist jedoch eine Basisstation erreichbar, so kann er automatisch zu dieser fahren, um beispielsweise seinen Akku aufzuladen oder aufgesammelten Schmutz abzuladen.

Eine Lokalisierung des Roboters 100 in einer bestehenden Karte des Robotereinsatzgebiets ermöglicht es auch, dass der Roboter 100 zuvor erkannte und/oder vom Nutzer in einer Karte markierte Gefahrenzonen in seiner Umgebung anhand der Karte wiedererkennt. Somit ist es möglich dies bei der Festlegung des zu reinigenden Bereichs zu berücksichtigen und insbesondere diese zu meiden. Eine solche Gefahrenzone ist beispielsweise ein Bereich in dem der Roboter regelmäßig stecken bleibt und nur durch Eingreifen des Nutzers befreit werden kann. Es kann sich jedoch auch um ein Gebiet handeln, bei dem der Nutzer nicht will, dass der Roboter hineinfährt, da hier beispielsweise sehr empfindliche Einrichtungsgegenstände stehen oder häufig Kleinteile wie Spielzeug herumliegen.

Eine Lokalisierung des Roboters in einer bestehenden Karte des Robotereinsatzgebiets ermöglicht es auch, dass der Roboter 100 während und/oder nach der Reinigung sowohl den zu reinigenden Bereich (z.B. Bereich L' gemäß Fig. 5) als auch das Reinigungsergebnis auf einer Mensch-Maschine-Schnittstelle (z.B. Tablet-PC 200, siehe Fig. 1) visualisieren kann. Zusätzlich kann so dem Nutzer angeboten werden, den gereinigten Bereich dauerhaft als Standardarbeitsbereich (vgl. Bereich L" gemäß Fig. 6) zu speichern, um für zukünftige Arbeitseinsätze schnell auswählbar zu sein (wie zuvor beschrieben). Insbesondere in Kombination mit dem mit Bezug auf Fig. 4 und 5 beschriebenen Vorgehensweise zur automatischen Anpassung eines standardisierten Bereichs L an die Umgebung wird so eine einfache unkomplizierte Möglichkeit geschaffen, derartige Standardarbeitsbereiche L" automatisch zu erzeugen.

Schließlich kann eine Lokalisierung des Roboters in einer bestehenden Karte des Robotereinsatzgebiets ermöglichen, dass der Roboter die Position der Bereiche zur lokalen Reinigung (Bereich L' gemäß Fig. 4 oder 5 oder Bereich L" gemäß Fig. 6) automatisiert speichern kann. Wenn ein solcher Bereich regelmäßig vom Nutzer zur Reinigung ausgewählt wird, so deutet dies auf eine stärkere Verschmutzung im Alltag hin. Während einer regulären Reinigung kann der Roboter diese Stelle besonders gründlich reinigen, indem sie beispielsweise zwei- oder mehrmals befahren und gereinigt wird, oder indem in diesem Bereich beispielsweise die Saugleistung erhöht wird.

*Schnellstart per Knopfdruck:* Zur vereinfachten Handhabung eines zuvor definierten und gespeicherten Standardarbeitsbereichs L" (siehe Fig. 6) kann der Nutzer beispielsweise einen Schnellzugriff (ein sogenannter *"Quick-Link"*) auf der Benutzeroberfläche (Home-Screen oder Desktop) einer programmierbaren Mensch-Maschine-Schnittstelle (z. B. Tablet-PC, Smartphone, Smartwatch, (Smart-)TV, Computer) einrichten, der nach einmaligem Anklicken direkt den Roboter beauftragt einen vorgegebenen Standardarbeitsbereich L" zu bearbeiten.

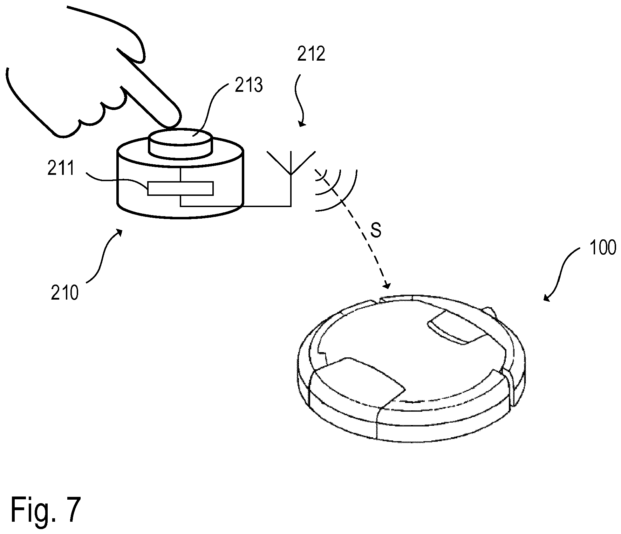

In einer weiteren Ausgestaltung wird ein roboterexternes Gerät verwendet, welches dazu ausgebildet ist nach beispielsweise einem Knopfdruck des Nutzers oder einem anderen Ereignis drahtlos ein Signal an den Roboter zu übermitteln. Ein Beispiel ist in Fig. 7 dargestellt. Fig. 7 zeigt das externe Gerät 210, welches in einem kompakten Gehäuse lediglich einen Taster 213 beinhaltet sowie eine Elektronik 211 (samt Energieversorgung), die dazu ausgebildet ist, bei einem Betätigen des Tasters 213 ein Funksignal S zu generieren, welches über eine Antenne 212 abgestrahlt wird. Der Roboter 100 kann so konstruiert sein, dass er als Reaktion auf dieses Signal eine vorgegebene Tätigkeit in einem vorgegebenen (lokalen) Standardarbeitsbereich L" ausführt. Dieses Gerät 210 kann der Nutzer beispielsweise in der Nähe des Einsatzgebiets wie zum Beispiel am Esstisch oder einem beliebigen anderen bequem zugänglichen Ort platzieren (z. B. kleben), um es so bei Bedarf (beispielsweise nach dem Essen) schnell aktivieren zu können. Auf diese Weise kann ein Reinigungsroboter rasch aktiviert werden, um z.B. einen Bereich L" um den Esstisch zu reinigen (vgl. Fig. 6). Auf gleiche Weise kann z.B. auch ein Transportroboter beauftragt werden, gebrauchtes Geschirr vom Esstisch zu einer Geschirrspülmaschine zu bringen, etc. Der Taster 213 kann auch als Kontaktschalter ausgestaltet sein, um beispielsweise als Ereignis ein öffnen und/oder schließen beispielsweise einer (Haus-)Tür, eines Fensters, eines Schubkastens oder einer Katzenklappe zu registrieren. So kann der Roboter 100 so konfiguriert werden, dass er bei Empfang eines Signals S, das von einem mit der Haustür verbundenen Kontaktschalter ausgelöst wird, den Eingangsbereich um die Haustür herum reinigt. Dies kann nach einer festlegbaren Verzögerung geschehen, so dass ein Nutzer, der gerade seine Wohnung betreten hat, genügend Zeit bleibt, um den Eingangsbereich zu verlassen, und so nicht von dem Roboter gestört wird.

Solch ein externes Gerät 210 kann sehr einfach und somit kostengünstig realisiert werden. Es benötigt eine Energieversorgung (in der Elektronik 211), einen Schalter 213 (z.B. Taster), der bei einem bestimmten Ereignis betätigt wird, und eine Sendeeinheit (in der Elektronik 211) zum Erzeugen eines Funksignals, um dem Roboter 100 nach dem vom Schalter detektierten Ereignis das Signal S zu senden. Die Energieversorgung kann eine Batterie sein. Alternativ kann die benötigte Energie auch aus der Umgebung und/oder dem zu detektierenden Ereignis heraus gewonnen werden (Energy-Harvesting). Insbesondere kann die benötigte Energie aus der mechanischen Arbeit gewonnen werden, die beim Betätigen des Schalters (Tasters) geleistet wird. So ist der Schalter beispielsweise mit einem piezoelektrischem Element gekoppelt, welches aus dem Knopfdruck des Nutzers die nötige Energie gewinnt, um das Signal an den Roboter zu senden. Der Schalter 213 kann als einfacher Druckknopfschalter oder Kontaktschalter ausgestaltet sein, der ausgelöst wird durch ein drücken des Nutzers oder durch Öffnen und/oder Schließen einer Tür. Die Sendeeinheit kann ein elektromagnetisches Signal aussenden, welches beispielsweise einem Standard für drahtlose Netzwerke wie ZigBee, WiFi oder Bluetooth entspricht. Das Signal S kann wie in Fig. 7 dargestellt direkt vom Roboter empfangen werden oder über weitere Geräte (Router, Repeater) geleitet werden. Alternativ kann das Signal aber beispielsweise auch akustisch sein, wobei eine von Menschen wahrnehmbare oder nicht wahrnehmbare (Ultraschall-) Frequenz genutzt werden kann. Es ist hierbei ausreichend, wenn das Signal einzig eine dem Gerät zuordenbare Kennung (wie beispielsweise eine MAC-Adresse, Identifikationsnummer, charakteristische Signalfrequenz oder ein beliebiger anderer Code) aufweist, mit der das Signal S codiert werden kann. Diese kann insbesondere bei der Produktion des Geräts festgelegt werden und muss nicht später veränderlich sein, wodurch reduzierte Kosten (z. B. für verwendete Speicher) anfallen.

Das Signal S kann eine Information transportieren, die fest mit einem bestimmten Standardarbeitsbereich L" (vgl Fig. 6) und der dort auszuführenden Aufgabe verknüpfbar ist. Diese Information kann in einem Code (z.B. die erwähnte Kennung) enthalten sein, welcher dazu verwendet wird, das Signal S zu codieren. Roboterseitig kann der mit dem (codierten) Signal S übertragene Code (z.B. die erwähnte Kennung) aus dem Signal S extrahiert werden. Wenn dieser extrahierte Code zuvor einer bestimmten vom Roboter in einem bestimmten Bereich zu erledigenden Aufgabe zugeordnet wurde, wird mit der Erledigung dieser Aufgabe in dem zugehörigen Bereich begonnen.

Das oben erläuterte Beispiel eines externen Geräts zur Steuerung eines autonomen mobilen Roboters, welches mittels Energy-Harvesting-Techniken die Energie zu seinem eigenen Betrieb gewinnt, kann noch erweitert werden. Ganz allgemein wird unter Energy-Harvesting das "Sammeln" von Energie aus der Umgebung und/oder von Energie, die bei der Benutzung des Geräts erzeugt wird (z.B. durch mechanische Arbeit beim Betätigen eines Schalters), verstanden. Zur Gewinnung elektrischer Energie können dabei unterschiedliche physikalische Effekte ausgenutzt werden wie z.B. der piezoelektrische Effekt, der thermoelektrische Effekt, der photoelektrische Effekt, Osmose, mechanische Arbeit aufgrund von Bewegung, Induktion, etc. Statt des oben erwähnten Schalters 213 kann das Gerät auch einen Sensor zur Erfassung von einem oder mehreren Parametern aufweisen, wie z.B. die Feuchtigkeit in einem Blumentopf, den pH-Wert in einem Swimming-Pool. Die gemessenen Parameterwerte (oder davon abhängige Werte) werden drahtlos an den Roboter übertragen, der dann basierend auf diesen Werten (oder basierend auf mehreren, innerhalb einer bestimmten Zeit empfangenen Werten) auf definierte Weise reagiert (z.B. eine vordefinierte Aufgabe an einem vordefinierten Ort zu erledigen. Der Roboter kann z.B. die Blumen gießen oder durch zugeben einer Chemikalie den pH-Wert des Pools anpassen. Die Entscheidung, welche Aktion der Roboter ausführen soll, kann im Roboter getroffen werden, oder in einem mit diesem verbundenen Server (z.B. in einem Cloud-Service).

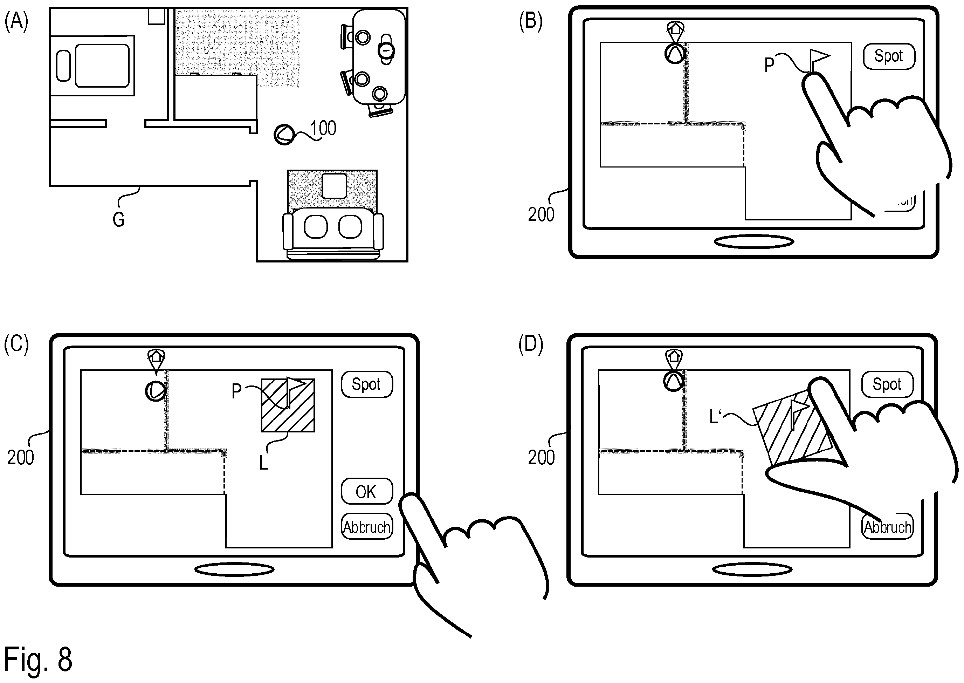

Figur 8 illustriert eine weitere Möglichkeit, einem autonomen mobilen Roboter einen konkreten Auftrag zu geben, um eine lokale Verschmutzung zu beseitigen. Figur 8A zeigt eine beispielhafte Wohnung als Einsatzgebiet G eines autonomen mobilen Roboters 100, wobei eine vereinfachte Karte des Einsatzgebiets G auf einer Mensch-Maschine-Schnittstelle wie einem Tablet-PC 200 (vgl. auch Fig. 1) dargestellt werden kann. Nach dem Aktivieren eines entsprechenden Betriebsmodus des Roboters 100 (z.B. durch Drücken eines hierzu am Touchscreen des Tablet-PCs 200 dargestellten Knopfes, in Fig, 8B mit "Spot" beschriftet) kann der Nutzer einen Punkt P in der Karte anwählen (siehe Fig. 8B). Die Koordinaten des vom Nutzer markierten Punktes P können an den Roboter gesandt werden. Dieser Punkt P wird beispielsweise als Mittelpunkt für einen standardisierten Bereich L (wie beispielsweise einem Quadrat angesehen, vgl. Fig. 4A oder 5A). Der zu reinigende standardisierte Bereich L wird nun ebenfalls in der Karte angezeigt (siehe Fig. 8C). Der Nutzer kann diesen nun durch Drücken der OK-Taste bestätigen oder durch Drücken der Abbruch-Taste ("Cancel-Button") den gesamten Vorgang abbrechen. Wenn der Nutzer erneut den standardisierten Bereich L beispielsweise mit einem Finger berührt, so kann er diesen verschieben und so besser an seine Wünsche anpassen, wodurch ein modifizierter Bereich L` durch den Nutzer festgelegt wird. Ebenfalls ist es möglich, basierend auf den vorhandenen Kartendaten den standardisierten Bereich L automatisch an die Gegebenheiten in der Umgebung des Bereichs L anzupassen und so automatisiert den modifizierten Bereich L' festzulegen. Dies kann in gleicher Weise erfolgen, wie es mit Bezug auf Fig. 4 und 5 beschrieben wurde. So wird beispielsweise der standardisierte Bereich L an nahen Wänden ausgerichtet oder bis zu dieser Wand erweitert.

Wenn der Nutzer die (z.B. auf dem Tablet-PC 200 dargestellte) Karte an einem anderen Bereich als dem standardisierten Bereich L berührt, so kann ein weiterer Punkt P hinzugefügt werden. Dieser kann ebenfalls an eine passende Stelle verschoben werden. So kann der Nutzer gleich mehrere kleinere Aufgaben an den Roboter übermitteln. Der Roboter kann selbstständig planen, wie er diese ausführt. So kann er z.B. die Reihenfolge beispielsweise so planen, dass möglichst wenig Zeit für die vollständige Bearbeitung benötigt wird. Wenn die beiden (oder mehr) Bereiche überlappen oder sehr nahe beieinander liegen (Abstand ist kleiner als ein vorgebbarer Maximalwert), so kann der Roboter selbstständig die beiden standardisierten Bereiche L (oder L') zu einem neuen Bereich vereinen. Im einfachsten Fall ist der standardisierte Bereich L immer ein Quadrat oder Kreis gleicher Grö-βe, beispielsweise um den durch Fingerzeig markierten Punkt P. Alternativ kann der Nutzer zwischen mehreren vordefinierten Größen (Seitenlänge, Radius, Fläche) und Formen (Kreis, Quadrat, Rechteck) beispielsweise aus einem am Tablet-PC 200 dargestellten Menü auswählen.

In dem in Fig. 8D dargestellten Beispiel kann der Nutzer durch Berühren des Bildschirms mit zwei Fingern die Größe und Orientierung eines quadratischen Bereichs L frei einstellen, um so einen modifizierten Bereich L' zu definieren. Dies geschieht beispielsweise dadurch, dass zwei diagonal gegenüberstehende Eckpunkte des Quadrats durch die Fingerberührung festgelegt werden. Alternativ kann dies auch mit einer Wischbewegung über den Touchscreen geschehen, wobei der Nutzer den Finger auf den gewünschten Mittelpunkt des zu reinigenden Gebiets legt und von da aus den Finger (auf dem Bildschirm) wegzieht. Die Richtung und die Entfernung der Wischbewegung definieren die Orientierung und Größe des zu definierenden Bereichs.

Wie zuvor beschrieben, beginnt die Reinigung, sobald der Nutzer den Auftrag beispielsweise durch Drücken einer OK-Taste bestätigt und der Roboter einen zuvor spezifizierten Bereich L oder L` erreicht hat. Um den Beginn der Arbeit zu beschleunigen, kann der Roboter von seiner aktuellen Position (z. B. Basisstation) starten und sich in Richtung der ersten eingegebenen Position bewegen, noch während die Nutzereingabe erfolgt (siehe z. B. die Roboterposition in Fig. 8C). Wenn der Nutzer mit einer Bestätigung des Reinigungsauftrags wartet, bis der Roboter die angegebene Position erreicht, so hat der Nutzer eine unmittelbare Bestätigung, ob seine Eingabe in der Karte der ihm wichtigen realen Position entspricht. Bei Bedarf kann er diese nochmals korrigieren, wodurch Fehler durch eine falsche Bedienung reduziert werden.

Da die Karte, welche ein Roboter zur Navigation nutzt in der Regel komplex und so für einen menschlichen Nutzer schwer verständlich ist, kann dem Nutzer eine stark vereinfachte und leicht interpretierbare Karte angezeigt werden. In dieser vereinfachten Karte kann der Nutzer dann die Position P des zu bearbeitenden Bereichs L angeben. Anschließend wird diese Position P mit einer Koordinatentransformation in Koordinaten in der Karte transformiert, welche der Roboter100 für die Navigation nutzt. Sowohl die Erstellung der vereinfachten Karte aus der Roboterkarte als auch die Koordinatentransformation zwischen beiden Karten kann auf dem Roboter 100, der Mensch-Maschine-Schnittstelle 200 oder einem externen Rechner (insbesondere einem über das Internet erreichbaren Cloud-Service) geschehen.

In dem oben mit Bezug auf Fig. 8 beschriebenen Beispiel wird dem Roboter eine Arbeitsanweisung mittels Nutzerinteraktion auf einer Karte des Robotereinsatzgebietes erteilt, wofür eine elektronische Karte benötigt wird, die auf einer Mensch-Maschine-Schnittstelle (MMS, z.B. Tablet-PC 200) dargestellt werden kann. Diese Karte kann grundsätzlich eine permanent gespeicherte Karte sein, welche beispielsweise durch den Roboter 100 bei einer Lernfahrt ermittelt oder durch einen Nutzer vorgegeben wurde. In diesem Zusammenhang bedeutet "permanente" Speicherung einer Karte lediglich, dass die Karte nicht bei jedem Robotereinsatz vom Roboter neu ermittelt wird, sondern grundsätzlich dafür vorgesehen ist, bei jedem Robotereinsatz wieder verwendet zu werden (ohne zeitliche Grenze, daher permanent). Permanent bedeutet hier insbesondere nicht unveränderlich oder schreibgeschützt, sondern betrifft lediglich die theoretisch unbegrenzte Wiederverwendung einer gespeicherten Karte. Das Problem einer solchen permanent gespeicherten Karte ist, dass beispielsweise durch Änderungen in der Umgebung des Roboters (wie das Verrücken von Möbeln) die Karte veraltete und somit ungültige und/oder falsche Daten enthalten kann. Zweck des im Folgenden erläuterten Verfahrens ist es, das Problem veralteter Daten zu vermeiden und trotzdem dem Nutzer eine Karte des Robotereinsatzgebiets zur Interaktion zur Verfügung zu stellen.

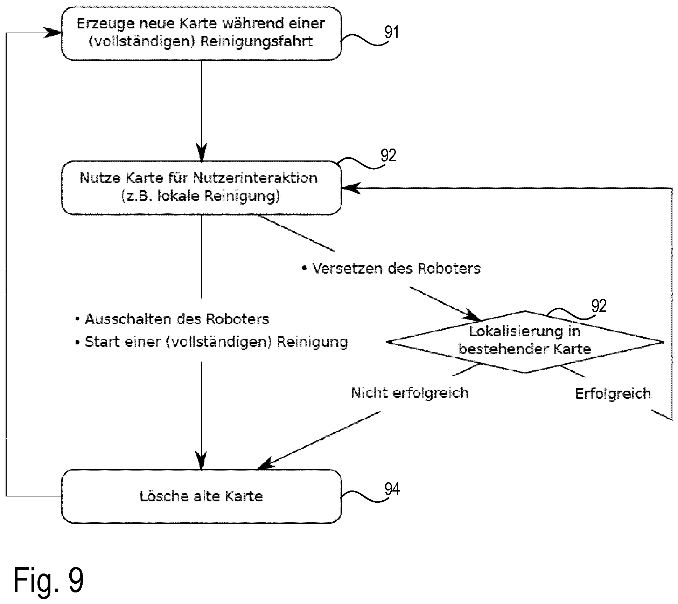

Um diesen Zweck zu erreichen, werden während jeder (vollständigen) Reinigungsfahrt die Kartendaten beispielsweise mit einem SLAM-Verfahren vollständig neu erstellt. Hierzu werden die alten Kartendaten zu Beginn der (vollständigen) Reinigungsfahrt gelöscht (siehe Fig. 9, Box 94) und eine neue Karte wird aufgebaut (siehe Fig. 9, Box 91). Durch eine regelmäßig durchgeführte vollständige Reinigung sind folglich die dem Nutzer auf den Karteninformationen beruhenden angezeigten Daten immer auf einem aktuellen Stand. Eine Störung der Reinigungsfahrt durch ungültige und/oder falsche Kartendaten wird vermieden. Die Kartendaten umfassen beispielsweise Informationen bezüglich Hindernissen in der Umgebung, über die befahrbare Fläche und/oder über die bearbeitete Fläche. Die aufgenommenen Kartendaten können schon während der Reinigungsfahrt dem Nutzer auf einer Mensch-Maschine-Schnittstelle (z. B. Tablet) angezeigt werden, so dass dieser den Bearbeitungsfortschritt beobachten kann. Eine vollständige Reinigungsfahrt zeichnet sich hierbei dadurch aus, dass alle für den Roboter zugänglichen Gebiete des Robotereinsatzgebiets bearbeitet werden. Diese vollständige Reinigungsfahrt kann beispielsweise durch den Nutzer durch drücken einer "Clean"-Taste am Roboter oder auf einer externen MMS (z. B. Tablet-PC) manuell gestartet werden. Alternativ kann der vollständige Reinigungslauf durch eine Kalenderfunktion des Roboters zu einem durch den Nutzer vordefinierten Zeitpunkt gestartet werden. Diese Kalenderfunktion kann beispielsweise täglich um 9:00 Uhr einen vollständigen Reinigungslauf veranlassen.

Nach der vollständigen Reinigung kehrt der Roboter beispielsweise zu seinem Ausgangspunkt oder der Basisstation (vgl. Fig. 6, Basisstation BS) zurück und wartet auf weitere Nutzerkommandos. Hierzu kann der Nutzer sich auf einer MMS (z. B. Tablet-PC) auf den Karteninformationen beruhenden Daten wie beispielsweise eine Reinigungskarte mit dem als gereinigt markiertem Gebiet anzeigen lassen. Für die folgenden Nutzerinteraktionen wird die zuvor neu aufgebaute Karte verwendet (siehe Fig. 9, Box 92). Anschließend kann der Nutzer beispielsweise den Roboter zu einem bestimmten Punkt des befahrbaren Gebiets schicken oder ein nochmals zu bearbeitendes Gebiet wählen. Dies kann beispielsweise wie zuvor beschrieben ein standardisierter Bereich mit einer vordefinierten geometrischen Grundform sein (siehe Bereiche L, L' in Fig. 3-5). Alternativ kann der Nutzer das zu bearbeitende Gebiet beispielsweise in Form eines Polygons festlegen. Hierzu kann er beispielsweise die Eckpunkte des Polygons in der Karte markieren. Beliebige andere Eingabeformen für das zu bearbeitende Gebiet sind denkbar. Der Roboter fährt hierauf zu einem Punkt des so festgelegten zu bearbeitenden Gebiets und reinigt alle erreichbaren Bereiche. Hierzu kann er beispielsweise wieder ein SLAM-Verfahren nutzen, um mit den zuvor aufgenommenen Kartendaten zuverlässig zu navigieren.

Ein weiterer Nutzereingriff kann das Versetzen des Roboters sein. Hierbei wird der Roboter durch den Nutzer aufgehoben und in einem neuen Einsatzgebiet (z. B. eine andere Etage) oder an einer neuen Position des bisherigen Einsatzgebiets abgesetzt, was der Roboter beispielsweise durch Radkontaktschalter detektieren kann. In diesem Fall kann der Roboter versuchen, seine Position in der alten Karte zu bestimmen (globale Lokalisierung, Fig. 9, Box 93). Für diese (globale) Lokalisierung nimmt der Roboter beispielsweise Karteninformationen in der Umgebung der Position auf, an der er abgesetzt wurde. Diese Karteninformationen werden mit den alten Karteninformationen verglichen, ob es eine Übereinstimmung mit erkannten Umgebungsmerkmalen gibt und wie gut diese ist. Wenn es diese Übereinstimmung gibt, so kann hieraus die Position des Roboters in der alten Karte bestimmt werden, und somit diese für die Navigation des Roboters und weitere Nutzerinteraktionen genutzt werden. Wenn es nicht gelingt beispielsweise in (und/oder nach) einer vorgebbaren Zeit, einer vorgebbaren Anzahl an Versuchen und/oder mit einer vorgebbaren Menge neuer Karteninformationen (z.B. Begrenzung des Speicherplatzbedarfs) eine vorgebbare Genauigkeit in der Übereinstimmung der neuen und alten Karteninformationen zu erkennen, gilt die Lokalisierung als nicht erfolgreich. In diesem Fall wird die alte Karte gelöscht (Fig. 9, Box 94) und basierend auf den bereits neu aufgenommenen Karteninformationen eine neue Karte aufgebaut. Insbesondere, wenn der Roboter während einer Reinigungsfahrt versetzt wird und die (globale) Lokalisierung nicht erfolgreich ist, so beginnt der Roboter die Reinigungsfahrt erneut von der aktuellen Position.

Ein weiterer Nutzereingriff ist das vollständige Ausschalten des Roboters. In diesem Fall kann der Roboter ein versetzen nicht mehr detektieren. Nach einem Neustart des Roboters kann der Roboter beispielsweise versuchen, sich in den alten Kartendaten zu lokalisieren. In einer alternativen Ausgestaltung sind die zuvor aufgenommenen Karteninformationen auf einem flüchtigen elektronischen Datenspeicher gespeichert, wodurch sie automatisch beim Ausschalten des Roboters gelöscht werden (Fig. 9, Box 94). Nach einem Neustart des Roboters, werden neue Karteninformationen aufgenommen.

Gemäß dem oben erläuterten Ansatz kann eine autonome mobile Bodenbearbeitungsmaschine wie folgt gesteuert werden. Zunächst werden aller Karteninformationen vor dem Start einer vollständigen Bodenbearbeitung im Einsatzgebiet der Bodenbearbeitungsmaschine gelöscht. Während der vollständigen Bodenbearbeitung werden neue Karteninformationen erfasst. Die neu erfassten Karteninformationen werden wie oben beschrieben auf einer Mensch-Maschine-Schnittstelle dargestellt, um eine Nutzerinteraktion zu ermöglichen. Von dieser Mensch-Maschine-Schnittstelle wird mindestens ein Nutzerkommando basierend auf den angezeigten Karteninformationen empfangen und die autonome mobile Bodenbearbeitungsmaschine wird entsprechend dem Nutzerkommando und den neu erfassten Karteninformationen gesteuert. In diesem Fall benötigt die Bodenbearbeitungsmaschine ein Navigationsmodul (siehe auch Fig. 1), das dazu ausgebildet ist, Karteninformationen betreffend die Umgebung der Bodenbearbeitungsmaschine zu erfassen, und mit diesen sich in der Umgebung zu lokalisieren und zu navigieren. Die Karteninformationen werden zumindest teilweise auf zumindest einer Mensch-Maschine-Schnittstelle angezeigt. Die Bodenbearbeitungsmaschine ist dazu ausgebildet, zumindest zwei unterschiedliche Nutzerkommandos von der zumindest einen Mensch-Maschine-Schnittstelle zu empfangen, wobei eines der Nutzerkommandos die erwähnte vollständige Bodenbearbeitung des Einsatzgebiets der Bodenbearbeitungsmaschine betrifft.

## Patentansprüche

1. Verfahren zur Steuerung eines autonomen mobilen Roboters mittels einer Mensch-Maschine-Schnittstelle,
wobei der Roboter (100) ein Navigationsmodul (102) mit einer elektronischen Karte und mit mindestens einem Sensor zur Navigation und Orientierung in der Umgebung aufweist, und
wobei Roboter (100) und Mensch-Maschine-Schnittstelle (200) über eine Kommunikationsverbindung Daten austauschen können;
wobei das Verfahren umfasst:
Anzeigen der Karte auf der Mensch-Maschine-Schnittstelle (200);
Markieren eines Punktes in der Karte durch einen Nutzer;
Automatisches Auswählen eines bestimmten Bereichs, der von dem ausgewählten Punkt abhängt,
**dadurch gekennzeichnet, dass** der bestimmte Bereich eine vordefinierte Grundform, eine vordefinierte Größe und eine vordefinierte Orientierung aufweist, wobei nach der Auswahl des bestimmten Bereichs zumindest einer der folgenden Parameter vordefinierte Grundform, vordefinierte Größe und vordefinierte Orientierung basierend auf in der elektronischen Karte gespeicherten ersten Informationen automatisch angepasst wird; und
anschließendes automatisches Steuern des Roboters (100), sodass dieser mit der Bearbeitung des angepassten bestimmten Bereiches beginnt.

2. Verfahren gemäß Anspruch 1, wobei die ersten Informationen zumindest eines der folgenden betrifft: Position und Lage von Wänden, Bodenbelagstypen, Position und Form von Hindernissen.

3. Verfahren gemäß einem der Ansprüche 1 oder 2,
wobei mehrere Punkte auf der Karte ausgewählt werden und der Roboter nacheinander an jedem Punkt einen bestimmten Bereich bearbeitet, und
wobei der Roboter zuvor eine optimale Reihenfolge der Punkte berechnet, sodass die insgesamt benötigte Zeit minimiert wird.

4. Verfahren gemäß einem der Ansprüche 1 oder 2,
wobei mehrere Punkte auf der Karte ausgewählt werden und der Roboter nacheinander an jedem Punkt einen bestimmten Bereich bearbeitet, und
wobei überlappende Bereiche zu einem weiteren Bereich vereint werden.

5. Verfahren gemäß einem der Ansprüche 1 bis 4,
bei dem der Roboter (100) automatisch an die durch den ausgewählten Punkt definierte Position hinfährt, bevor der Benutzer die Markierung weiterer Punkte und die Anpassung der bestimmten Bereiche beendet hat.

6. Verfahren gemäß einem der Ansprüche 1 bis 5, sofern sie auf dem Anspruch 2 rückbezogen sind,
bei dem Informationen betreffend die Umgebung des Roboters mittels mindestens eines Sensors erfasst werden, und
wobei die automatische Anpassung der Parameter des bestimmten Bereichs zusätzlich basierend auf den erfassten Informationen betreffend die Umgebung erfolgt.

7. Verfahren gemäß Anspruch 6,
wobei die vordefinierte Grundform abhängig von den erfassten Informationen betreffend die Umgebung ausgewählt wird.

8. Verfahren gemäß einem der Ansprüche 6 oder 7, wobei das automatische Anpassen aufweist:
Modifizieren des bestimmten Bereichs - ausgehend von der vordefinierten Größe und der vordefinierten Orientierung - durch zumindest einer der folgenden Operationen: Rotieren, Verschieben, Skalieren, und Erweitern um mindestens einen zusätzlichen Teilbereich.

9. Verfahren gemäß einem der Ansprüche 6 bis 8, wobei der mindestens eine Sensor ein Schmutzsensor ist, der dazu ausgebildet ist, Verschmutzungen auf einer Bodenfläche zu detektieren, und wobei die Informationen betreffend die Umgebung des Roboters Informationen über die Verschmutzung von zumindest einem Teils der Bodenfläche sind,
wobei das Verfahren weiter aufweist:
Ermitteln einer Wahrscheinlichkeitsverteilung basierend auf den ermittelten Informationen über die Verschmutzung um den markierten Punkt;
Modifizieren des bestimmten Bereichs - basierend auf der ermittelten Wahrscheinlichkeitsverteilung - durch zumindest einer der folgenden Operationen: Rotieren, Verschieben, Skalieren, und Erweitern um mindestens einen zusätzlichen Teilbereich.

10. Verfahren gemäß einem der Ansprüche 6 bis 8, wobei der mindestens eine Sensor ein Sensor zur Detektion von Wänden und Hindernissen ist, und wobei die Informationen betreffend die Umgebung des Roboters Informationen über die Position und Lage von Wänden oder anderen Hindernissen sind.
wobei das Verfahren weiter aufweist:
Modifizieren des bestimmten Bereichs durch Erweitern des bestimmten Bereichs um mindestens einen zusätzlichen Teilbereich, der zwischen dem bestimmten Bereich und einer detektieren Wand oder einem detektierten Hindernis liegt.

11. Verfahren gemäß einem der Ansprüche 6 bis 8, wobei der mindestens eine Sensor dazu ausgebildet ist, Grenzen zwischen unterschiedlichen Bodenbelägen zu detektieren, und wobei die Größe und die Lage des bestimmten Bereichs so bestimmt wird, dass er an einer Bodenbelagsgrenze ausgerichtet ist.

12. Verfahren gemäß einem der Ansprüche 6 bis 8, wobei der mindestens eine Sensor dazu ausgebildet ist, zu erkennen, ob der bestimmte Bereich zumindest teilweise unter einem Möbelstück liegt und wobei die Größe und die Lage des bestimmten Bereichs so bestimmt wird, dass er die unter einem detektierten Möbelstück liegende Bodenfläche vollständig umfasst oder dass er vollständig unter dem detektierten Möbelstück liegt.

13. System umfassend einen autonomen mobilen Roboter (100) und eine Mensch-Maschine-Schnittstelle (102),
wobei der Roboter (100) ein Navigationsmodul (102) mit einer elektronischen Karte und mit mindestens einem Sensor zur Navigation und Orientierung in der Umgebung aufweist, und
wobei Roboter (100) und Mensch-Maschine-Schnittstelle (200) dazu ausgebildet sind, über eine Kommunikationsverbindung Daten auszutauschen,
wobei die Mensch-Maschine-Schnittstelle (200) dazu ausgebildet ist:
die elektronische Karte anzuzeigen;
wobei die Mensch-Maschine-Schnittstelle (200) weiter dazu ausgebildet ist:
dem Nutzer die Möglichkeit zu geben, einen Punkt in der Karte zu markieren;
einen bestimmten Bereich automatisch auszuwählen, der von dem ausgewählten Punkt abhängt
**dadurch gekennzeichnet, dass** der bestimmte Bereich eine vordefinierte Grundform, eine vordefinierte Größe und eine vordefinierte Orientierung aufweist, wobei nach der Auswahl des bestimmten Bereichs zumindest einer der folgenden Parameter vordefinierte Grundform, vordefinierte Größe und vordefinierte Orientierung basierend auf in der elektronischen Karte gespeicherten ersten Informationen automatisch angepasst wird; und
anschließend den Roboter (100) zu steuern, sodass dieser mit der Bearbeitung des angepassten bestimmten Bereiches beginnt.

## Claims

1. A method for controlling an autonomous mobile robot using a human-machine interface,
wherein the robot (100) has a navigation module (102) with an electronic map and with at least one sensor for navigation and orientation in the surroundings, and
wherein robot (100) and human-machine interface (200) can exchange data via a communication link;
the method comprising:
displaying the map on the human-machine interface (200);
marking a point in the map by a user;
automatically selecting a specific area that depends on the selected point,
**characterized in that** the specific area has a predefined basic shape, a predefined size and a predefined orientation, wherein after selection of the specific area at least one of the following parameters predefined basic shape, predefined size and predefined orientation based on first information stored in the electronic map is automatically adjusted; and
then automatically controlling the robot (100) to start machining the adjusted specific area.

2. The method according to claim 1, wherein the first information relates to at least one of the following: position and location of walls, types of floor covering, position and shape of obstacles.

3. The method according to any one of claims 1 or 2,
wherein several points are selected on the map and the robot sequentially processes a specific area at each point, and
wherein the robot previously calculates an optimal order of the points so that the total time required is minimized.

4. The method according to any one of claims 1 or 2,
wherein several points are selected on the map and the robot sequentially processes a specific area at each point, and
wherein overlapping areas are merged into another area.

5. The method according to any one of claims 1 to 4,
in which the robot (100) automatically moves to the position defined by the selected point before the user has finished marking further points and adjusting the specific areas.

6. The method according to any one of claims 1 to 5, provided that they are dependent on claim 2,
in which information relating to the surroundings of the robot is sensed using at least one sensor, and
wherein the automatic adjustment of the specific area's parameters is additionally based on the information sensed relating to the surroundings.

7. The method according to claim 6,
wherein the predefined basic shape is selected depending on the information sensed relating to the surroundings.

8. The method according to any one of claims 6 or 7, wherein automatically adjusting has:
modifying the specific area - on the basis of the predefined size and the predefined orientation - by at least one of the following operations: rotating, shifting, scaling, and expanding by at least one additional sub-area.

9. The method according to any one of claims 6 to 8, wherein the at least one sensor is a dirt sensor designed to detect soiling on a floor surface, and wherein the information relating to the surroundings of the robot is information on soiling of at least part of the floor surface,
the method further having:
identifying a probability distribution based on the information identified on the soiling around the marked point;
modifying the specific area - based on the identified probability distribution - by at least one of the following operations: rotating, shifting, scaling, and expanding by at least one additional sub-area.

10. The method according to any one of claims 6 to 8, wherein the at least one sensor is a sensor for detection of walls and obstacles, and wherein the information relating to the surroundings of the robot is information on the position and location of walls or other obstacles.
the method further having:
modifying the specific area by expanding the specific area by at least one additional sub-area that is between the specific area and a detected wall or a detected obstacle.

11. The method according to any one of claims 6 to 8, wherein the at least one sensor is designed to detect boundaries between different floor coverings, and wherein the size and location of the specific area is determined such that it is aligned with a floor covering boundary.

12. The method according to any one of claims 6 to 8, wherein the at least one sensor is designed to recognize whether the specific area lies at least partially under a piece of furniture and wherein the size and location of the specific area is determined such that it completely covers the floor area lying under a detected piece of furniture or that it lies completely under the detected piece of furniture.

13. A system comprising an autonomous mobile robot (100) and a human-machine interface (102),
wherein the robot (100) has a navigation module (102) with an electronic map and with at least one sensor for navigation and orientation in the surroundings, and
wherein robot (100) and human-machine interface (200) are designed to exchange data via a communication link,
wherein the human-machine interface (200) is designed to:
display the electronic map;
wherein the human-machine interface (200) is further designed to:
provide the user with the possibility to mark a point on the map;
to automatically select a specific area that depends on the selected point
**characterized in that** the specific area has a predefined basic shape, a predefined size and a predefined orientation, wherein after selection of the specific area at least one of the following parameters predefined basic shape, predefined size and predefined orientation based on first information stored in the electronic map is automatically adjusted; and
then to control the robot (100) to start machining the adjusted specific area.

## Revendications

1. Procédé de contrôle d'un robot mobile autonome à l'aide d'une interface homme-machine,
dans lequel le robot (100) comporte un module de navigation (102) avec une carte électronique et avec au moins un capteur pour la navigation et l'orientation dans l'environnement, et
dans lequel le robot (100) et l'interface homme-machine (200) peuvent échanger des données via une liaison de communication ;
dans lequel le procédé comprend :
l'affichage de la carte sur l'interface homme-machine (200) ;
le marquage d'un point sur la carte par un utilisateur ;
la sélection automatique d'une zone spécifique qui dépend du point sélectionné,
**caractérisé en ce que** la zone spécifique comporte une forme de base prédéfinie, une taille prédéfinie et une orientation prédéfinie, dans lequel après la sélection de la zone spécifique au moins l'un des paramètres suivants parmi la forme de base prédéfinie, la taille prédéfinie et l'orientation prédéfinie est automatiquement réglé sur la base des premières informations stockées dans la carte électronique ; et
puis le contrôle automatique du robot (100) pour démarrer l'usinage de la zone spécifique réglée.

2. Procédé selon la revendication 1, dans lequel les premières informations concernent au moins l'un des éléments suivants : la position et l'emplacement des parois, les types de revêtements de sol, la position et la forme des obstacles.

3. Procédé selon l'une des revendications 1 ou 2,
dans lequel plusieurs points sont sélectionnés sur la carte et le robot traite séquentiellement une zone spécifique à chaque point, et
dans lequel le robot calcule préalablement un ordre optimal des points afin que le temps total nécessaire soit minimisé.

4. Procédé selon l'une des revendications 1 ou 2,
dans lequel plusieurs points sont sélectionnés sur la carte et le robot traite séquentiellement une zone spécifique à chaque point, et
dans lequel les zones qui se chevauchent sont fusionnées dans une autre zone.

5. Procédé selon l'une des revendications 1 à 4,
dans lequel le robot (100) se déplace automatiquement jusqu'à la position définie par le point sélectionné avant que l'utilisateur n'ait fini de marquer d'autres points et de régler les zones spécifiques.

6. Procédé selon l'une des revendications 1 à 5, dans la mesure où elles dépendent de la revendication 2,
dans lequel des informations relatives à l'environnement du robot sont collectées au moyen d'au moins un capteur, et
dans lequel le réglage automatique des paramètres de la zone spécifique est en outre basé sur les informations collectées relatives à l'environnement.

7. Procédé selon la revendication 6,
dans lequel la forme de base prédéfinie est sélectionnée en fonction des informations collectées relatives à l'environnement.

8. Procédé selon l'une des revendications 6 ou 7, dans lequel le réglage automatique comporte :
la modification de la zone spécifique, en fonction de la taille prédéfinie et de l'orientation prédéfinie, par au moins une des opérations suivantes : la rotation, le déplacement, le redimensionnement et l'agrandissement d'au moins une zone partielle supplémentaire.

9. Procédé selon l'une des revendications 6 à 8, dans lequel l'au moins un capteur est un capteur de saleté qui est conçu pour détecter la saleté sur une surface au sol, et dans lequel les informations relatives à l'environnement du robot concernent des informations sur la saleté d'au moins une partie de la surface au sol,
dans lequel le procédé comporte en outre :
la détermination d'une distribution de probabilité sur la base des informations déterminées concernant la saleté autour du point marqué ;
la modification de la zone spécifique, sur la base de la distribution de probabilité déterminée, par au moins une des opérations suivantes : la rotation, le déplacement, le redimensionnement et l'agrandissement d'au moins une zone partielle supplémentaire.

10. Procédé selon l'une des revendications 6 à 8, dans lequel l'au moins un capteur est un capteur de détection de parois et d'obstacles, et dans lequel les informations relatives à l'environnement du robot sont des informations de position et d'emplacement de parois ou d'autres obstacles.
dans lequel le procédé comporte en outre :
la modification de la zone spécifique en agrandissant la zone spécifique d'au moins une zone partielle supplémentaire qui se trouve entre la zone spécifique et une paroi ou un obstacle détecté(e).

11. Procédé selon l'une des revendications 6 à 8, dans lequel l'au moins un capteur est conçu pour détecter les démarcations entre différents revêtements de sol, et dans lequel la taille et l'emplacement de la zone spécifique sont déterminés de sorte qu'elle soit alignée avec une démarcation de revêtement de sol.

12. Procédé selon l'une des revendications 6 à 8, dans lequel l'au moins un capteur est conçu pour détecter si la zone spécifique est au moins partiellement sous un meuble et dans lequel la taille et la position de la zone spécifique sont déterminées de telle sorte qu'elle recouvre entièrement la surface au sol située sous un meuble détecté ou qu'elle se trouve entièrement sous le meuble détecté.

13. Système comprenant un robot mobile autonome (100) et une interface homme-machine (102),
dans lequel le robot (100) comporte un module de navigation (102) avec une carte électronique et avec au moins un capteur pour la navigation et l'orientation dans l'environnement, et
dans lequel le robot (100) et l'interface homme-machine (200) sont conçus pour échanger des données via une liaison de communication,
dans lequel l'interface homme-machine (200) est conçue pour :
afficher la carte électronique ;
dans lequel l'interface homme-machine (200) est en outre conçue pour :
permettre à l'utilisateur de marquer un point sur la carte ; sélectionner automatiquement une zone spécifique en fonction du point sélectionné
**caractérisé en ce que** la zone spécifique comporte une forme de base prédéfinie, une taille prédéfinie et une orientation prédéfinie, dans lequel après la sélection de la zone spécifique au moins l'un des paramètres suivants parmi la forme de base prédéfinie, la taille prédéfinie et l'orientation prédéfinie est automatiquement réglé sur la base des premières informations stockées dans la carte électronique ; et
puis commander le robot (100) pour démarrer l'usinage de la zone spécifique réglée.
